# EUROPÄISCHE PATENTSCHRIFT

(11) **EP 0 296 307 B1**
(45) Veröffentlichungstag und Bekanntmachung des Hinweises auf die Patenterteilung: **15.09.1993**
(21) Anmeldenummer: 88101913.7
(22) Anmeldetag: 10.02.1988
(51) Int. Cl.: H03F 3/08, H03K 17/78, G05B 11/42

(54) **Schaltungsanordnung für einen analogen, elektronischen Regler**
Circuit design for an anolog electronic controller
Circuit pour régulateur analogue electronique

(30) Priorität: 25.06.1987 DE 3720996
(43) Veröffentlichungstag der Anmeldung: 28.12.1988
(73) Patentinhaber: Lenze GmbH & Co. KG Aerzen, D-31855 Aerzen (DE)
(72) Erfinder: Karl, Heinz-Dietmar, Dipl.-Ing., D-4924 Barntrup (DE); Tinebor, Manfred, Dipl.-Ing., D-4924 Barntrup (DE); Lackhove, Josef, Dipl.-Ing., D-3251 Aerzen (DE)
(74) Vertreter: Elbertzhagen, Otto

(56) Entgegenhaltungen:
- EP-A- 0 116 831
- BE-A- 793 016
- ELECTRONICS, 15. Mai 1975, Seiten 98-99, New York, US; A. NIELSEN et al.: "Matched optical couplers stabilize isolation circuit"
- TOUTE L'ELECTRONIQUE, , no. 432, Mai 1978, Seiten 53-57, Paris, FR; M. PETRI: "Nouveaux développements des coupleurs optiques"

## Beschreibung

Die Erfindung bezieht sich auf eine Schaltungsanordnung für einen analogen, elektronischen Regler, bestehend aus einem Operationsverstärker mit einem eingangsseitigen Summationspunkt für den Soll-Istwert-Vergleich und einem damit verbundenen Rückführkreis, in dem ein Funktionsglied angeordnet ist, und mit einem Optokoppler, bestehend aus einer Luminiszenzdiode und einem Fototransistor als Trennelement im Ausgangskreis.

Solche Schaltungsanordnungen werden unter anderem zur Regelung von Kleinmotoren eingesetzt, wobei man mit dem Trennglied eine Potentialtrennung zwischen dem Leistungskreis des Kleinmotors und dem Regelkreis vornimmt. Bei bekannten Schaltungsanordnungen der vorgenannten Art verwendet man als Trennglieder Übertrager, Stromtrafos oder dergleichen, um eine galvanische Trennung zwischem dem Leistungskreis des Motors und dem Regelkreis sicherzustellen. Unabhängig davon muß man als Funktionselement einen Funktionsbildner mit einem entsprechenden Verstärker vorsehen, um dem Motor beispielsweise ein bestimmtes Drehzahlverhalten in Abhängigkeit von der Last aufprägen zu können.

Eine Schaltungsanordnung der gattungsbildenden Art zur Signalübertragung zwischen Stromkreisen, die galvanisch voneinander getrennt sind, ist aus der DE-C-32 19 964 bekannt. Der Nachteil des für die galvanische Trennung verwendeten Optokopplers liegt darin, daß die Lichtstrahlung seiner Luminiszenzdiode nicht linear von der an der Diode liegenden Spannung oder von dem die Diode durchfließenden Strom abhängt. Sofern man keine zusätzliche Signalaufbereitung vorsieht, sind Optokoppler für Regelschaltungen ungeeignet, weil sie ein nicht lineares Übertragungsverhalten aufweisen. Deshalb ist bei der bekannten Schaltungsanordnung zur Linearisierung des Übertragungsignals der dort vorhandene zweite Regler als D-Regler mit einem zweiten Optokoppler gegengekoppelt. Eine gute Linearität läßt sich mit einer solchen Schaltungsanordnung nur bei geringer Spannungsverstärkung erzielen, weshalb bei der bekannten Schaltungsanordnung der weiter vorhandene PI-Regler keine solche Gegenkopplung aufweist. Für Regler, insbesondere integrale Regler, mit großen Stellbereichen ist jedoch eine Linearisierung der Übertragung auch bei hoher Spannungsverstärkung unumgänglich.

Eine ähnliche Schaltungsanordnung ist aus der US-Z "Electronics / May 15, 1975 S. 98, 99" bekannt, die nicht ausdrücklich für einen analogen, elektronischen Regler bestimmt ist, jedoch auch schon einen Operationsverstärker mit einem Rückführkreis und einem Optokoppler als Trennelement im Ausgangskreis aufweist, wobei im Ausgangskreis dieses Operationsverstärkers eine weitere uminiszenzdiode angeordnet ist, die mit einem Fototransistor zusammenwirkt, der mit seiner Kollektor- Emitter-Strecke im Rückführkreis des Operationsverstärkers liegt. Im Rückführkreis des Operationsverstärkers ist lediglich ein Ohmscher Widerstand vorgesehen, weil es hier nicht darauf ankommt, auf das Regelverhalten eines analogen, elektronischen Reglers Einfluß zu nehmen.

Aus der DE-Offenlegungsschrift DE-A-22 18 431 ist ferner eine Schaltungsanordnung zur Linearisierung der Lichtausstrahlung von Luminiszenzdioden bekannt. Im Ausgangskreis eines Operationsverstärkers liegen in Reihe zwei Luminiszenzdioden von zwei Optokopplern, von denen die eine als Steuerdiode mit einem lichtelektrischen Wandler mit linearer Kennlinie zusammenwirkt. Dieser Wandler liegt im Rückführweg des Operationsverstärkers, so daß durch Invertierung des Steuersignals das Übertragungsverhalten des zweiten Optokopplers für die Signalübertragung linearisiert werden kann.

Der Erfindung liegt nun die Aufgabe zugrunde, die Vorteile einer solchen linearisierten Signalübertragung mittels eines Optokopplers für eine Schaltungsanordnung der gattungsgemäßen Art zu nutzen, wobei noch zusätzlich eine die Regelcharakteristik bestimmende Aufbereitung des rückgeführten Steuersignals erfolgen soll.

Diese Aufgabe wird bei einer Schaltungsanordnung der gattungsbildenden Art nach der Erfindung dadurch gelöst, daß im Ausgangskreis des Operationsverstärkers eine weitere Luminiszenzdiode angeordnet ist, die mit einem Fototransistor zusammenwirkt, der mit seiner Kollektor-Ermitter-Strecke im Rückführkreis des Operationsverstärkers liegt.

Der besondere Vorteil der erfindungsgemäßen Schaltungsanordnung liegt darin, daß nicht allein über den Optokoppler eine Potentialtrennung des Reglerausganges erreicht wird, sondern vor allem der Rückführweg des Operationsverstärkers, der für die Linearisierung der fotoelektrischen Übertragung notwendig ist, zusätzlich die Möglichkeit bietet, darin das das Regelverhalten bestimmende Funktionsglied zu integrieren.

Dadurch kann die Bauelementeanzahl, der Platzbedarf und insgesamt der Aufwand für die Schaltungsanordnung erheblich reduziert werden, auch wird der Energiebedarf für den Regelkreis minimiert.

Die Erfindung wird nachstehend anhand der Zeichnung noch näher erläutert. Die Zeichnung zeigt in
- Fig. 1: ein Blockdiagramm eines bekannten Regelgerätes für Kleinmotoren und
- Fig. 2: eine Schaltungsanordnung für den Drehzahlregler und die Potentialtrennung nach Fig.1.

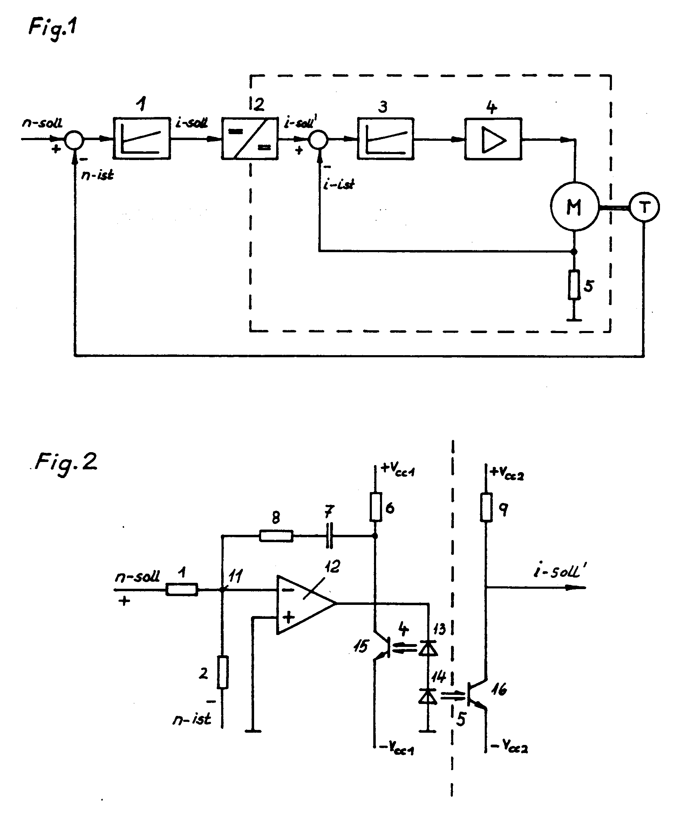

In Figur 1 erkennt man einen Drehzahlregler 1, dem eine Potentialtrennung 2 nachgeschaltet ist. Der Bereich des Regelgerätes, der auf Netzpotential liegt, ist in Fig.1 durch eine gestrichte Linie eingerahmt. Dazu gehört der Ausgang der Potentialtrennung 2, an dem über einen Summationspunkt ein Stromregler 3 angeschlossen ist. An dem Summationspunkt werden der Sollwert und der Istwert des Motorstroms miteinander verglichen, und der Vergleichswert wird auf einen Stromregler 3 gegeben. Dem Stromregler 3 ist ein Treiber 4 nachgeordnet, der von der Netzspannung versorgt wird und an dem ein Motor M liegt. Ferner ist dem Motor noch ein Strommeßshunt 5 nachgeordnet, der ebenso wie der Motor M, der Treiber 4, der Stromregler 3 und der Ausgang der Potentialtrennung 2 netzpotentialbehaftet ist. Mechanisch ist der Motor M mit einer Tachomaschine T gekuppelt, die einen drehzahlabhängigen Spannungswert liefert, der am Eingang des Drehzahlreglers 1 mit einer Spannung für den Drehzahlsollwert verglichen wird.

Fig. 2 zeigt nun eine Schaltungsanordnung für den potentialmäßig abgekoppelten Drehzahlregler.

An einem Summationspunkt 11 wird ein Stromvergleich über Widerstände 1 und 2 für den Drehzahlsollwert n-soll und dem Drehzahlistwert n-ist vorgenommen, und der Vergleichswert wird auf den invertierten Eingang eines Operationsverstärkers 12 gegeben. Im Ausgangskreis des Operationsverstärkers 12 liegen in Reihe zwei Lumineszenzdioden 13 und 14, die je einem Optokoppler 4 und 5 zugeordnet sind. Der Optokoppler 5 mit der Lumineszendiode 14 dient der Signalübertragung, und er besitzt einen Fototransistor 16 mit einem Arbeitswiderstand 9 ausgangsseitig. Der zweite Optokoppler 4 wirkt mit einem weiteren Fototransistor 15 zusammen, der einen Arbeitswiderstand 6 im Kollektorzweig hat.

Der Kollektorkreis des Fototransistors 15 liegt im Rückführweg des Operationsverstärkers 12, in den ein komplexer Widerstand, nämlich ein RC-Glied 7, 8, eingefügt ist.

Zum einen wird durch diese Schaltungsanordnung die nichtlineare Übertragung der Fotodiode 14 des Optokopplers 5 für die Signalübertragung durch den reziproken Einfluß des Optokopplers 4 direkt in der die Regelcharakteristik bestimmenden Reglerrückführung kompensiert.

Zum zweiten ist der in die Rückführung des Operationsverstärkers 12 eingefügte, komplexe Widerstand maßgeblich für das Regelverhalten, hier für das Drehzahlverhalten des geregelten Motors. So wird mit dem Zeitglied 7,8 eine PI-Regelung erzielt, für andere Zwecke und für andere Regelcharakteristika kann ein entsprechend anderer komplexer Widerstand in die Rückführung des Operationsverstärkers 12 eingefügt werden.

## Patentansprüche

1. Schaltungsanordnung für einen analogen, elektronischen Regler, bestehend aus einem Operationsverstärker (12) mit einem eingangsseitigen Summationspunkt (11) für den Soll-Istwert-Vergleich und einem damit verbundenen Rückführkreis, in dem ein Funktionsglied (7,8) angeordnet ist, und mit einem Optokoppler (5), bestehend aus einer Luminiszenzdiode (14) und einem Fototransistor (16), als Trennelement im Ausgangskreis,
dadurch gekennzeichnet,
daß im Ausgangskreis des Operationsverstärkers (12) eine weitere Luminiszenzdiode (13) angeordnet ist, die mit einem weiteren Fototransistor (15) zusammenwirkt, der mit seiner Kollektor- Emitter-Strecke im Rückführkreis des Operationsverstärkers (12) liegt, wobei das Funktionsglied (7,8) ein komplexer Widerstand ist, der in Reihe mit der Kollektor-Emitter-Strecke des weiteren Fototransistors (15) liegt und das Regelverhalten des Reglers bestimmt.

2. Schaltungsanordnung nach Anspruch 1,
dadurch gekennzeichnet,
daß der komplexe Widerstand (7,8) ein RC-Glied ist.

## Claims

1. Circuit arrangement for an analogue electronic control consisting of an operations amplifier (12) with a summation point (11) on the input side for the ideal/actual value comparison, and a return circuit connected therewith and containing a function member (7,8), and with an opto-coupler (5), comprising a luminescence diode (14) and a photo-transistor (16), as separating element in the output circuit,
characterised in that in the output circuit of the operations amplifier (12) there is a further luminescence diode (13) which interacts with a further phototransistor (15) which lies with its collector-emitter path in the return circuit of the operations amplifier (12) wherein the function member (7,8) is a complex resistance which lies in series with the collector-emitter path of the further phototransistor (15) and determines the control behaviour of the control.

2. Circuit arrangement according to claim 1,
characterised in that the complex resistance (7,8) is an RC member.

## Revendications

1. Circuit pour régulateur analogique électronique comprenant un amplificateur opérationnel (12) avec, du côté entrée, un point de sommation (11) servant à la comparaison de la valeur de consigne et de la valeur réelle, et un circuit de retour y raccordé, dans lequel un organe de commande (7, 8) est disposé, et avec un coupleur opto-électronique (5) composé d'une diode luminescente (14) et d'un phototransistor (16) comme élément séparateur dans le circuit de sortie,
caractérisé par le fait
qu une autre diode luminescente (13) est disposée dans le circuit de sortie de l'amplificateur opérationnel (12), laquelle diode luminescente (13) coopère avec un autre phototransistor (15), dont le parcours collecteur-émetteur est situé dans le circuit de retour de l'amplificateur opérationnel (12), l'organe de commande (7, 8) étant une résistance complexe, qui, disposée en série avec le parcours collecteur-émetteur de l'autre phototransistor (15), détermine le comportement du régulateur.

2. Circuit selon revendication 1,
caractérisé par le fait
que la résistance complexe (7, 8) est un circuit RC.
